(19) Europäisches Patentamt
European Patent Office
Office européen des brevets

(11) EP 1 058 712 B1

(12) FASCICULE DE BREVET EUROPEEN

(45) Date de publication et mention de la délivrance du brevet:
**30.01.2008 Bulletin 2008/05**

(21) Numéro de dépôt: **99936084.5**

(22) Date de dépôt: **24.02.1999**

(51) Int Cl.:
***C08L 83/04*** *(2006.01)*

(86) Numéro de dépôt international:
**PCT/FR1999/000419**

(87) Numéro de publication internationale:
**WO 1999/043753 (02.09.1999 Gazette 1999/35)**

# (54) UTILISATION D'UNE COMPOSITION DE SILICONE ADHESIVE RETICULABLE POUR LE COLLAGE DE SUBSTRATS DIVERS

ANWENDUNG EINER HÄRTBAREN SILIKONKLEBSTOFFZUSAMMENSETZUNG ZUM VERKLEBEN VON VERSCHIEDENEN SUBSTRATEN

USE OF A CROSS-LINKABLE ADHESIVE SILICONE COMPOSITION FOR BONDING VARIOUS SUBSTRATES

(84) Etats contractants désignés:
**AT BE CH DE DK ES FI FR GB GR IE IT LI LU NL PT SE**

(30) Priorité: **27.02.1998 FR 9802651**

(43) Date de publication de la demande:
**13.12.2000 Bulletin 2000/50**

(73) Titulaire: **Bluestar Silicones France**
**69486 Lyon (FR)**

(72) Inventeurs:
- **BOHIN, Fabrice**
  **F-92300 Levallois Perret (FR)**
- **JOUBERT, Gérard**
  **38780 Pont Evêque (FR)**
- **LOUBET, Olivier**
  **F-69003 Lyon (FR)**
- **POUCHELON, Alain**
  **F-69330 Meyzieu (FR)**
- **LORENZETTI, Dominique**
  **F-69300 Caluire (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 599 532**
**EP-A- 0 757 080**
**US-A- 5 364 921**
**EP-A- 0 681 014**
**EP-A- 0 816 465**
**US-A- 5 595 826**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 058 712 B1

Printed by Jouve, 75001 PARIS (FR)

## Description

Le domaine général de l'invention est celui des compositions élastomères silicones réticulables par addition et/ou condensation. Les polyorganosiloxanes considérés (POS) sont du type vulcanisable à froid (RTV), sachant que classiquement ils se présentent sous forme de système bicomposant (RTV-2), dont la vulcanisation peut être accélérée à chaud.

On s'intéresse plus spécialement dans le cadre de l'invention aux compositions silicones autoadhérentes réticulant par réaction d'addition, dont la cinétique peut être significativement augmentée par élévation de la température.

Plus précisément encore, la présente invention vise l'utilisation comme adhésif de compositions silicones adhésives réticulables par addition et mettant en oeuvre également des réactions de condensation pour développer l'adhérence.

La réticulation et le durcissement incident de ces compositions silicones, appliquées à l'interface de deux solides, participent au mécanisme d'adhésion qui permet de lier les deux solides l'un à l'autre. La réticulation par addition fait intervenir des groupements insaturés, en particulier alcényles et plus particulièrement encore vinyles (Vi), liés au silicium dans le POS (motifs Si-Vi) ainsi que des hydrogènes liés au silicium du même ou d'un autre POS (motifs SiH). Ces réactions peuvent être assimilées à des hydrosilylations des motifs Si-Vi par des motifs Si-H.

La condensation nécessaire à l'adhérence implique des groupements alcoxylés OR, liés aux atomes de silicium de silanes et/ou d'autres alcoxydes (résines POS) de la composition.

Les réticulations par addition peuvent être avantageusement catalysées par des composés métalliques qui sont, respectivement, du type platinique.

On connaît déjà pour d'autres applications que celles du collage, des compositions élastomères silicones utilisables pour l'enduction de différents supports fibreux tissés ou non. Après réticulation, le film enduit sur le support forme un revêtement de protection et de renfort mécanique. De tels supports fibreux ainsi revêtus d'un film élastomère silicone réticulé, peuvent être utilisés pour la fabrication de sac gonflable de protection individuelle d'occupants de véhicules (" AIRBAG "). Un exemple de telles compositions élastomères silicones est donné par la demande de brevet européen N° 0 681 014, au nom de la déposante et concernant une composition élastomère silicone d'enduction, du type de celle vulcanisable à froid et consistant dans le mélange formé de :

(**I**) au moins un polyorganosiloxane présentant, par molécule, au moins deux groupes alcényles, en $C_2$-$C_6$ liés au silicium,
(**II**) au moins un polyorganosiloxane présentant, par molécule, au moins trois atomes d'hydrogène liés au silicium,
**(III)** une quantité catalytiquement efficace d'au moins un catalyseur, composé d'au moins un métal appartenant au groupe du platine,
**(IV)** un promoteur d'adhérence,
(**V**) éventuellement une charge minérale,
**(VI)** éventuellement au moins un inhibiteur de réticulation,
(**VII**) et éventuellement au moins une résine polyorganosiloxane insaturée,

caractérisée en ce que le promoteur d'adhérence comporte exclusivement :

(**IV.1**) au moins un organosilane alcoxylé contenant, par molécule, au moins un groupe alcényle en $C_2$-$C_6$,
(**IV.2**) au moins un composé organosilicié comprenant au moins un radical époxy,
(**IV.3**) au moins un chélate de métal M et/ou un alcoxyde métallique de formule générale : M $(OJ)_n$, avec n = valence de M et J = alkyle linéaire ou ramifié en $C_1$ - $C_8$,

M étant choisi dans le groupe formé par : Ti, Zr, Ge, Li, Mn, Fe, Al, Mg.

Plus précisément, cette composition d'enduction peut comprendre :

(**I**) - POS Si-Vi du genre polydiméthylsiloxane $\alpha,\omega$-$(CH_3)_2ViSiO_{0,5}$ de viscosité = 100 000 mPa.s à 25° C ;
(II) - POS SiH du genre polydiméthyl-méthylhydrogéno-$\alpha,\omega$-$(CH_3)_2$ $HSiO_{0,5}$ ;
(III) - Catalyseur au platine
(IV) - Promoteur :

(IV.1) = vinyltriméthoxysilane (VTMO)
(IV.2) 3-glycidoxypropyltriméthoxysilane (GLYMO),
(IV.3) = orthotitanate de butyle (TBOT);

(V) - Charge = silice broyée ou silice renforcée

(VI) - inhibiteur éventuel = éthynylcyclohexanol (ECH),
(VII) - éventuelle résine POS porteuse d'insaturation(s), de formule suivante, exprimée en motifs siloxyles :M $M^{Vi}$ $DD^{Vi}$ Q

dans laquelle

- M = $(CH_3)_3\ SiO_{0,5}$
- $M^{Vi}$ = $(CH_3)_2ViSiO_{0,5}$
- D = $(CH_3)_2$ SiO
- $D^{Vi}$ = $CH_3ViSiO$
- Q = $SiO_2$.

Le revêtement silicone obtenu après réticulation du film d'enduction à base de cette composition possède de bonnes propriétés de dureté, de résistance mécanique, d'uniformité de surface, et de résistance à la chaleur. Le promoteur IV selon l'invention revendiquée dans cette demande de brevet européen, procure une amélioration de l'adhérence du revêtement sur le tissu. Cela se traduit dans un test de froissement norme FFG 37 110 d'un tissu enduit, par un seuil allant de 350 à 600 cycles pour les échantillons testés dans les exemples.

Dans la mesure où la vocation première des compositions selon cette demande de brevet EP 0 681 014 n'est pas le collage de deux éléments l'un à l'autre, il est clair que son pouvoir d'adhésion n'est pas optimisé. En tout état de cause, cette composition d'enduction ne saurait constituer une colle.

Comme autre illustration de l'art antérieur, on peut citer la demande de brevet européen EP 0 326 712 qui divulgue une composition POS réticulable comprenant :

- un polydiméthylsiloxane $\alpha,\omega$-$(CH_3)_2ViSiO_{0,5}$ ayant un degré de polymérisation DP de 300 ;
- un POS SiH du genre polydiméthylméthylhydrogénosiloxane $\alpha,\omega$-$(CH_3)_3SiO_{0,5}$
- un catalyseur au platine ;
- un inhibiteur de réticulation du type 3-méthyl-1-butyne-3-ol
- et un promoteur d'adhérence comprenant du glymo GLYMO, et un éther diallylique de triméthyl-ol-propane, d'éthylène glycol ou de glycérol.

Selon cette demande EP 0 326 712, une telle composition silicone peut être utilisée comme adhésif. Mais les performances obtenues en la matière restent modestes comme en témoignent les essais d'adhésion réalisés selon un test JIS K 6301. Les valeurs maximales d'adhésion obtenues sont de l'ordre d'une trentaine de kilo par $cm^2$ et varient selon les substrats.

Face à un tel état de la technique ne proposant pas d'adhésif à base d'une composition silicone réticulable par addition/condensation et ayant toutes les spécifications attendues pour les colles, à savoir :

- stabilité à la conservation
- viscosité de la forme liquide de la composition en adéquation avec les exigences de facilité d'application sur les substrats à coller,
- haut pouvoir adhésif,
- tenue à la température,
- stabilité du collage dans le temps,
- faible coût de revient.

La déposante s'est fixée pour objectif l'utilisation d' une composition liquide adhésive à base de silicone, réticulable par addition SiH / SiVi qui satisfasse aux susdites spécifications, à titre d'adhésif pour le collage de divers substrats, par exemple métalliques ou plastiques.

Un autre objectif essentiel de la présente invention est l'utilisation d'une composition silicone réticulable pour le collage de composants électriques / électroniques ou de pièces mécaniques notamment dans le domaine de l'automobile ou le domaine de l'électroménager (connectique).

Un autre objectif essentiel de la présente invention est de fournir un procédé de collage d'au moins deux substrats à l'aide d'une composition silicone réticulable, ledit procédé permettant d'obtenir facilement et économiquement un assemblage solide et durable entre les deux substrats.

Pour atteindre ces objectifs, les inventeurs ont eu le mérite de mettre en évidence de manière tout à fait surprenante et inattendue et après de longues et laborieuses recherches, une sélection judicieuse et avantageuse d'un sous-groupe de compositions élastomères silicones réticulables, parmi le grand groupe de compositions divulguées dans l'EP 681 014. Ce sous-groupe a la particularité d'être singulièrement adhérent et de présenter par ailleurs toutes

les caractéristiques et notamment rhéologiques et mécaniques pour former un excellent adhésif.

C'est ainsi que la présente invention satisfait aux susdits objectifs, parmi d'autres, en proposant, en premier lieu, l'utilisation d'une composition silicone adhésive, réticulable du type de celles comprenant dans les proportions suivantes, en % en poids sur sec par rapport à la masse totale :

**(I)** 1 à 80 % d'au moins un polyorganosiloxane **(POS I)** présentant, par molécule, au moins deux groupes alcényles liés au silicium ;
**(II)** 0,1 à 20 % d'au moins un polyorganosiloxane **(POS II)** présentant, par molécule, au moins trois atomes d'hydrogène liés au silicium ;
**(III)** 0,0002 à 0,04 % d'une quantité catalytiquement efficace d'au moins un catalyseur, composé d'au moins un métal appartenant au groupe du platine,
**(IV)** un promoteur d'adhérence à base de :

- **(IV.1)** 0,01 à 5 % d'au moins un organosilane alcoxylé contenant, par molécule, au moins un groupe alcényle en $C_2$-$C_6$,
- (**IV.2a**) 0,01 à 5 % d'au moins un composé organosilicié de formule générale suivante :

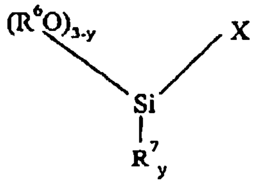

**(IV.2a)**

dans laquelle :

- $R^6$ est un radical alkyle linéaire ou ramifié en $C_1$-$C_4$,
- $R^7$ est un radical alkyle linéaire ou ramifié
- y est égal à 0, 1, 2 ou 3, de préférence à 0 ou 1 et, plus préférentiellement encore à 0,

x=

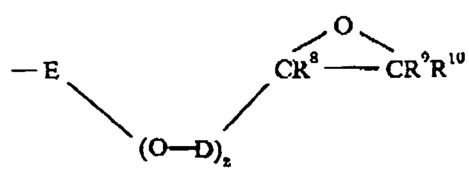

avec

- E et D qui sont des radicaux identiques ou différents choisis parmi les alkylènes en $C_1$-$C_4$ linéaires ou ramifiés,
- z qui est égal à 0 ou 1,
- $R^8$, $R^9$, $R^{10}$ qui sont des radicaux identiques ou différents
  représentant l'hydrogène ou un alkyle linéaire ou ramifié en $C_1$-$C_4$, l'hydrogène étant plus particulièrement préféré,
- $R^8$, $R^9$, $R^{10}$ pouvant alternativement constituer ensemble avec les deux carbones
- δ - sa résistance à la déchirure $R_d$ (N/mm) après réticulation, mesurée par un test Td (ASTM - 624A), supérieure ou égale à 6, et
- γ - sa dureté SHORE A, ci-après dénommée dureté D, après réticulation ; mesurée par un test $T_S$ (DIN 5335), supérieure ou égale à 35, ladite composition étant caractérisée en ce que :
- β - sa viscosité η juste après mélange de tous ses constituants, est comprise entre 50 000 et 300 000 mPa.s à 25° C;

ladite viscosité étant ajustée en faisant varier la longueur de chaîne et le poids moléculaire des **POS I** et/ou **II,** en ajustant la concentration du **POS II** réticulant et/ou le nombre de sites SiH qu'il comporte, en choisissant des

concentrations plus ou moins élevées en catalyseurs / ou en mettant en oeuvre une résine **POS VII** alcénylée, par exemple vinylée ayant un réseau de réticulation plus ou moins dense en fonction de la quantité de motifs siloxyles Q et/ou T = $CH_3SiO_{1,5}$.

La composition utilisée selon l'invention est une colle tout à fait performante, se présentant sous une forme liquide facilement applicable par tout moyen connu en soi et approprié sur les substrats à assembler. (e.g. calandrage - coulée - rouleaux - râcle...).

Cette composition silicone adhésive présente un haut pouvoir d'adhésion ainsi qu'une stabilité à la conservation avant réticulation, une stabilité du collage après réticulation et une tenue à la température du joint de collage, tout-à-fait satisfaisantes.

Concernant la caractéristique $\alpha$, le test Tp de mesure de la force de pelage Fp, est défini par le protocole suivant :

***1- Enduction***

Le mélange des constituants I à VII est réalisé manuellement ou à l'aide d'un pistolet pneumatique avec mélangeur statique.

La composition silicone adhésive I à VII est déposée par sérigraphie avec différentes grilles (grille nylon de 75 micromètres (microns) ou grille inox de 50 micromètres (microns)). Cela Cela permet de faire varier les quantités de composition déposées de 20 à 100 g/$cm^2$.

Les éprouvettes sont des feuilles de substrat plastique Sa tel que défini infra dans l'exemple 4, qui ont des dimensions de 100 x 150 mm. La surface enduite est de 50 x 100 mm.

A chaque enduction, la quantité de composition RTV est pesée avec précision.

***2 - Pressage***

Pour chaque échantillon testé, deux éprouvettes de tissus de 150 x 100 x 2 mm sont accolées l'une à l'autre et placées entre deux feuilles antiadhésives. Elles sont ensuite soumises à une pression d'une tonne fournie par une presse hydraullique de 10 tonnes, chauffée à 160° C.

La pression appliquée sur le tissu est d'environ 30 N/$cm^2$ (en négligeant l'épaissseur de composition RTV joint de collage).

Le temps de pressage est de 3 min après fermeture de la presse.

***3 - Pelage***

La mesure du pelage est effectuée au dynamomètre avec cellule de 100 N. Le tirage s'effectue sur 50 mm de largeur (largeur d'enduction, supression effet de bord) et sur une longueur de 50 mm, à 50 mm/min.

***4 - Résultat***

On mesure des newtons pour 50 mm de largeur des tirages. La force de pelage Fp s'exprime en N/mm.

S'agissant de la viscosité $\eta$ de la composition silicone adhésive utilisée selon l'invention, il convient de noter que cette viscosité de même que toutes celles dont il est question dans le présent exposé, correspond à une grandeur de viscosité dynamique à 25° C dite " Newtonienne ", c'est-à-dire la viscosité dynamique qui est mesurée, de manière connue en soi, à un gradient de vitesse de cisaillement suffisamment faible pour que la viscosité mesurée soit indépendante du gradient de vitesse.

Cette viscosité $\eta$ (caractéristique $\beta$) est celle mesurée dans les 5 min qui suivent le mélange de tous les constituants I à VII, avant qu'apparaisse de manière significative le durcissement induit par la réticulation par addition/condensation, qui ne manque pas de se produire dès que les produits I, II, III et éventuellement IV sont mis en présence, et/ou dès que les produits IV et I, II, III, VII, réagissent entre eux par condensation sous l'effet de l'humidité ambiante et/ou par ouverture de cycles époxy.

Le viscosimètre utilisé peut être du type rhéomètre à aiguilles tels que ceux de marque brookfield®.

Conformément à l'invention, l'état de la composition après réticulation, est l'état dans lequel la composition doit se trouver pour que puisse être effectués les tests Tp, Td et Ts. Il se définit par l'atteinte d'une valeur palier de son module en extension et de sa dureté.

Le test Td de mesure de la résistance à la déchirure Rd est celui répondant à la norme ASTM - 524A.

S'agissant de la dureté D, elle est mesurée par le test Ts qui correspond à une norme DIN 5335.

Par ailleurs, la composition et l'utilisation selon l'invention sont avantageuses en ce qu'elles fournissent une colle à prise rapide à chaud (par exemple entre 10 et 180 s à 160°C, selon les cas), ladite colle étant stable pendant

plusieurs jours à température ambiante.

De plus, le fait qu'elle soit très facilement manipulable à froid constitue un autre point positif particulièrement appréciable en pratique.

Par rapport aux colles organiques, la composition et l'utilisation de ce silicone RTV adhésif permet un collage non fusible. Cela signifie qu'une fois réticulée, la composition selon l'invention ne se retransforme pas en liquide puisqu'elle n'est pas thermoplastique.

La tenue à chaud d'un collage selon l'invention peut par exemple atteindre 225° C.

Conformément à une disposition préférée de l'invention, l'organosilane alcoxylé (**IV.1**) du promoteur **(IV)** est plus particulièrement sélectionné parmi les produits de formule générale suivante :

**(IV.1)**

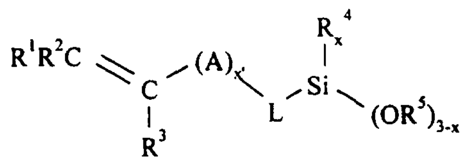

dans laquelle :

- $R^1$, $R^2$, $R^3$ sont des radicaux hydrogénés ou hydrocarbonés identiques ou différents entre eux et représentent, de préférence, l'hydrogène, un alkyle linéaire ou ramifié en $C_1$-$C_4$

ou un phényle éventuellement substitué par au moins un alkyle en $C_1$-$C_3$,

- A est un alkylène linéaire ou ramifié en $C_1$-$C_4$,
- L est un lien valenciel ou l'oxygène,
- $R^4$ et $R^5$ sont des radicaux identiques ou différents et représentent un alkyle en $C_1$-$C_4$ linéaire ou ramifié,
- x'=0 ou 1,
- x = 0 à 4, de préférence 0 ou 1 et plus préférentiellement encore 0.

Sans que cela ne soit limitatif, il peut être considéré que le vinyltriméthoxysilane est un composé (**IV.1**) particulièrement approprié.

Les composés (**IV.2**) sont préférentiellement des époxyalcoxymonosilanes (**IV.2a**).

A titre d'exemple de tels composés **(IV.2)** on peut citer :

le 3-glycidoxypropyltriméthoxysilane **(GLYMO)**
ou le 3,4-époxycyclohexyléthyltriméthoxysilane.

En ce qui concerne le dernier composé essentiel (IV.3) du promoteur d'adhérence (IV) les produits préférés sont ceux dans lesquels le métal M est choisi dans la liste suivante : Ti, Zr, Ge, Li, Mn. Il est à souligner que le titane est plus particulièrement préféré. On peut lui associer, par exemple, un radical alkyle de type butyle.
En pratique, le promoteur d'adhérence **(IV)** est e.g. :

vinyltriméthoxysilane (VTMS) / 3-glycidoxypropyltriméthoxysilane (GLYMO) / titanate de butyle.

Sur le plan quantitatif, il peut être précisé que les proportions pondérales entre **(IV.1)**, **(IV.2)** et **(IV.3),** exprimées en pourcentages en poids par rapport au total des trois, sont les suivantes :

(**IV.1**) compris entre 15 et 70 et de préférence entre 30 et 50,
(**IV.2**) compris entre 15 et 70 et de préférence entre 30 et 50,
(**IV.3**) compris entre 5 et 25 et de préférence entre 10 et 20

étant entendu que la somme de ces proportions en **(IV.1), (IV.2), (IV.3)** est égale à 100 %.

De façon tout à fait intéressante, il a pu être décelé une corrélation, d'une part, entre les performances d'adhérence et de structure du revêtement silicone élastomère, et d'autre part, le ratio pondéral **(IV.2)** : **(IV.1).** Ainsi, ce ratio est de préférence compris entre 2 : 1 et 0,5 : 1, le ratio 1 : 1 étant plus particulièrement préféré.

Avantageusement, le promoteur d'adhérence est présent à raison de 0,1 à 10, de préférence 0,5 à 8 et plus

préférentiellement encore 1 à 5 % en poids par rapport à l'ensemble des constituants de la composition.

La composition utilisée selon l'invention peut comprendre au moins une résine insaturée POS **(VII)** comportant au moins deux restes alcényles, de préférence vinyles par molécule.

Avantageusement, la résine POS (**VII**) comporte dans sa structure de 0,1 à 20 % en poids de groupe(s) alcényle (s), ladite structure présentant au moins deux motifs différents choisis parmi les motifs de types M, D, T et Q, l'un au moins de ces motifs étant un motif de type T ou Q.

En pratique, cette résine (**VII**) répond de préférence à l'une des deux formules suivantes :

**(VII.1)** $MM^{Vi}DD^{Vi}Q$ ou $MD^{Vi}Q$ **(VII.2)**

Cette résine **(VII)** participe à l'établissement des propriétés rhéologiques, mécaniques et adhésives de la composition. On sait que les motifs siloxyles Q jouent un rôle relativement important à cet égard. Ainsi, conformément à une disposition avantageuse de l'invention. La résine (VII) contient des motifs Q à raison d'au moins 5 %, de préférence au moins 7 %, et plus préférentiellement encore à raison de 8 à 30%.

Selon une variante la résine (VII) comprend des motifs siloxyles T.

Le polyorganosiloxane **(I)** est pondéralement l'un des constituants essentiels de la composition utilisée selon l'invention. Avantageusement, Il s'agit d'un produit présentant des motifs de formule :

$$W_aZ_bSiO_{\frac{4-(a+b)}{2}} \quad \textbf{(I.1)}$$

dans laquelle :

- W est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne :

$$Z_cSiO_{\frac{4-c}{2}} \quad \textbf{(I.2)}$$

dans laquelle Z a la même signification que ci-dessus et c a une valeur comprise entre 0 et 3, par exemple entre 1 et 3.

Il est avantageux que ce polydiorganosiloxane ait une viscosité au moins égale à 10 mPa.s, de préférence à 1000 mPa.s et plus préférentiellement encore comprise entre 5.000 et 200.000 mPa.s. A titre d'exemple de composé (I), on peut citer le polydiméthylsiloxane.

Le polyorganosiloxane **(I)** peut être uniquement formé de motifs de formule **(I.1)** ou peut contenir, en outre, des motifs de formule **(I.2).** De même, il peut présenter une structure linéaire ramifiée cyclique ou en réseau. Son degré de polymérisation est, de préférence, compris entre 2 et 5 000.

Z est généralement choisi parmi les radicaux méthyle, éthyle et phényle, 60 % molaire au moins des radicaux Z étant des radicaux méthyle.

Des exemples de motifs siloxyle de formule (**I.1**) sont le motif vinyldiméthylsiloxane, le motif vinylphénylméthylsiloxane et le motif vinylsiloxane.

Des exemples de motifs siloxyle de formule **(I.2)** sont les motifs $SiO_{4/2}$, diméthylsiloxane, méthylphénylsiloxane, diphénylsiloxane, méthylsiloxane et phénylsiloxane.

Des exemples de polyorganosiloxanes **(I)** sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Le polyorganosiloxane (**II**) est de préférence du type de ceux comportant des motifs siloxyle de formule :

$$H_d L_e SiO_{\frac{4-(d+e)}{2}} \quad \textbf{(II.1)}$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d est 1 ou 2, e est 0, 1 ou 2, d + e a une valeur comprise entre 1 et 3,
- éventuellement, au moins une partie des autres motifs étant des motifs de formule moyenne :

$$L_g SiO_{\frac{4-g}{2}} \quad \textbf{(II.2)}$$

dans laquelle L a la même signification que ci-dessus et g a une valeur comprise entre 0 et 3.

La viscosité dynamique de ce polyorganosiloxane **(II)** ≥ à 5 de préférence à 10 et, plus préférentiellement encore, est comprise entre 20 et 1000 mPa.s.

A titre d'exemples de polyorganosiloxane **(II)**, on peut citer le poly(diméthylsiloxane) (méthylhydrogénosiloxy) α,ω diméthylhydrogénosiloxane.

Le polyorganosiloxane **(II)** peut être uniquement formé de motifs de formule **(II.1)** ou comporte en plus des motifs de formule **(II.2).**

Le polyorganosiloxane **(II)** peut présenter une structure linéaire ramifiée cyclique ou en réseau. Le degré de polymérisation est supérieur ou égal à 2. Plus généralement, il est inférieur à 5 000.

Le groupe L a la même signification que le groupe Z ci-dessus.

Des exemples de motifs de formule (**II.1**) sont :

$H(CH_3)_2SiO_{1/2}$, $HCH_3SiO_{2/2}$, $H(C_6H_5)SiO_{2/2}$

Les exemples de motifs de formule (**II.2**) sont les mêmes que ceux donnés plus haut pour les motifs de formule (**I.2**).

Des exemples de polyorganosiloxane (**II**) sont :

- les diméthylpolysiloxanes à extrémités hydrogénodiméthylsilyle,
- les copolymères à motifs diméthyl-hydrogénométhylpolysiloxanes (diméthyl) à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques.

Le rapport du nombre d'atomes d'hydrogène lié au silicium dans le polyorganosiloxane **(I)** sur le nombre de groupes à insaturation alcényle du polyorganosiloxane (**II**) est compris entre 0,4 et 10, de préférence entre 0,8 et 3.

Le polyorganosiloxane (**I**) et/ou le polyorganosiloxane **(II)** peuvent être dilués dans un solvant organique non toxique compatible avec les silicones.

Les polyorganosiloxanes (**I**) et (**II**) en réseau sont dénommés couramment résines silicones.

Les bases de compositions silicones polyaddition peuvent ne comporter que des polyorganosiloxanes **(I)** et **(II)** linéaires comme, par exemple, celles décrites dans les brevets : US-A-3 220 972, US-A-3 697 473 et US-A-4 340 709 ou comporter à la fois des polyorganosiloxanes (**I**) et (**II**) ramifiés ou en réseau, comme par exemple celles décrites dans les brevets : US-A-3 284 406 et US-A-3 434 366.

Les catalyseurs **(III)** sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur **(III),** calculée en poids de platine-métal, est généralement comprise entre 2 et 400 ppm, de préférence entre 5 et 200 ppm basés sur le poids total des polyorganosiloxanes (**I**) et (**II**).

La charge (V) éventuellement prévue est de préférence minérale. Elle peut être constituée par des produits

choisis parmi les matières siliceuses (ou non).

S'agissant des matières siliceuses, elles peuvent jouer le rôle de charge renforçante ou semi-renforçante.

Les charges siliceuses renforçantes sont choisies parmi les silices colloïdales, les poudres de silice de combustion et de précipitation ou leur mélange.

Ces poudres présentent une taille moyenne de particule généralement inférieure à 0,1 μm et une surface spécifique BET supérieure à 50 $m^2$/g, de préférence comprise entre 150 et 350 $m^2$/g.

Les charges siliceuses semi-renforçantes telles que des terres de diatomées ou du quartz broyé, peuvent être également employées.

En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 μm et une surface BET inférieure à 100 m2/g.

De façon pratique mais non limitative, la charge employée est du quartz ou un mélange de quartz et de silice.

La charge peut être traitée par tout ou partie d'au moins l'un et/ou l'autre des composés **(IV.1)** à **(IV.3)** du promoteur **(IV).**

Sur le plan pondéral, on préfère mettre en oeuvre une quantité de charge comprise entre 20 et 50, de préférence entre 25 et 35 % en poids par rapport à l'ensemble des constituants de la composition.

Avantageusement, la composition élastomère silicone comprend au moins un ralentisseur **(VI)** de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

$$R - (R') C (OH) \equiv CH$$

formule dans laquelle,

- R est un radical alkyle linéaire ou ramifié, ou un radical phényle ;
- R' est H ou un radical alkyle linéaire ou ramifié, ou un radical phényle ;

les radicaux R, R' et l'atome de carbone situé en α de la triple liaison pouvant éventuellement former un cycle ;
le nombre total d'atomes de carbone contenu dans R et R' étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3-éthyl-6-nonyne-1-ol-3 ;
- le méthyl-3 pentadécyne-1 ol-3.

Ces alcools α-acétyléniques sont des produits du commerce.

Un tel ralentisseur **(VI)** est présent à raison de 3 000 ppm au maximum, de préférence à raison de 100 à 2000 ppm par rapport au poids total des organopolysiloxanes **(I)** et (**II**).

De manière connue en soi, la composition élastomère silicone peut être additionnée de divers additifs classiques comme par exemple les colorants.

Selon un mode de mise en oeuvre particulièrement préféré, à la composition utilisée selon l'invention fait

intervenir les constituants (**I**) à (**VII**) dans les proportions suivantes, en % en poids sur sec par rapport à la masse totale :

| | | | |
|---|---|---|---|
| **(I)** | 1 à 80 | de préférence | 10 à 60 |
| **(II)** | 0,1 à 20 | de préférence | 0,5 à 10 |
| **(III)** | 0,0002 à 0,04 | de préférence | 0,0005 à 0,02 |
| **(IV.1)** | 0,01 à 5 | de préférence | 0,05 à 2 |
| **(IV.2)** | 0,01 à 5 | de préférence | 0,05 à 2 |
| **(IV.3)** | 0,01 à 3 | de préférence | 0,1 à 1 |
| **(V)** | 0 à 60 | de préférence | 10 à 40 |
| (**VI**) | 0 à 0,5 | de préférence | 0,005 à 0,3 |
| (**VII**) | 0 à 80 | de préférence | 5 à 60. |

Un système précurseur bicomposant peut être utilisé pour former la composition silicone élastomère décrite supra.

Un tel système précurseur se présente en deux parties A et B distinctes, destinées à être mélangées pour former la composition, l'une de ces parties **A** ou **B** comprenant le catalyseur (**III**) et une seule espèce **(I)** ou (**II**) de polyorganosiloxane. Une autre caractéristique de ce système précurseur est, d'une part, que sa partie A ou **B** contenant le composé **(IV.1)** du promoteur **(IV)** ne comprend pas le catalyseur (III) et, d'autre part, que la résine (VII) peut-être mise en oeuvre dans la partie A ou la partie **B** ou dans les deux parties **A** et **B**, la partie **A** ou **B** contenant le POS (II) et la résine **(VII)** étant exempte de catalyseur **(III)**.

Il est à noter que dans le cas où le composé **(IV.3)** est un titanate de butyle, il est préférable qu'il ne soit pas contenu dans la même partie **A** ou **B** que le POS (**II**).

La composition peut, par exemple, être constituée d'une partie A comprenant les composés (**IV.1**) et (**IV.2**) tandis que la partie **B** contient le composé (**IV.3**).

Selon un premier mode opératoire pour l'obtention de la composition silicone bicomposant **A-B**, on prépare tout d'abord un prémélange en mélangeant une charge minérale **(V),** au moins une partie de la résine **(VII)** ainsi qu'au moins une partie du polyorganosiloxane **(I).**

Ce prémélange sert de base pour obtenir, d'une part, une partie **A** résultant du mélange de ce dernier avec le polyorganosiloxane **(II)** éventuellement un inhibiteur de réticulation et enfin les composés **(IV.1)** et **(IV.2)** du promoteur **(IV).**

La partie **B** est réalisée par mélange d'une partie du prémélange visé ci-dessus et de polyorganosiloxane (**I**) ainsi que de base colorante, de catalyseur (Pt) et de composés **(IV.3)** du promoteur (**IV**).

Selon une variante - a - de ce 1 er mode opératoire, la résine insaturée (**VII**) est mise en oeuvre sous forme sèche, sans solvant extérieur au mélange (**I**) à **(VII).**

En pratique, la résine **(VII)** est incorporée dans l'huile silicone POS **(I).**

Selon une variante - b - du 1 er mode opératoire, la résine insaturée **(VII)** est mise en oeuvre en solution dans un solvant organique, qui peut être en pratique celui employé lors de la fabrication.

L'élimination du solvant peut être effectuée avant l'incorporation de la résine dans le prémélange ou bien encore après la réalisation de celui-ci.

Suivant un deuxième mode opératoire pour l'obtention de la composition silicone bi-composant **A - B,** on ne prévoit pas de prémélange **V**, **VII** et **I**.

Conformément à l'invention, le premier mode opératoire est celui que l'on privilégie. Les variantes a et b de ce premier mode sont indifféremment mises en oeuvre. Il est à noter que dans le cas de la variante b, on préfère procéder à l'élimination du solvant au terme de la préparation du prémélange.

La viscosité des parties **A** et **B** et de leur mélange peut être ajustée en jouant sur les quantités des constituants et en choisissant les polyorganosiloxanes de viscosité différente.

Une fois mélangées l'une à l'autre les parties **A** et **B** forment une composition élastomère silicone (EVF II) prête à l'emploi, qui peut être appliquée sur les substrats à coller par tout moyen approprié (par exemple râcle ou cylindre).

La réticulation de la compositon appliquée sur le support à revêtir peut être provoquée par voie thermique et/ou par rayonnement électromagnétique (UV).

Suivant une caractéristique remarquable de l'utilisation selon l'invention, les substrats qui peuvent être collés par la composition sont en polymère thermoplastique ou thermodurcissable, de préférence en phénoplaste, en polyamide, en polyester, en ABS, en polycarbonate, en PVC, en polyéther, en polyoléfine ou en résine époxy.

Les substrats peuvent également être métalliques, il peut s'agir e.g. : aluminiums bruts ou traités, aciers bruts ou traités, ou métaux laqués.

C'est ainsi que la composition utilisée selon l'invention est autoadhérente sur l'aluminium (type AG3) et sur

l'acier (type Sollac R 1426) avec une résistance en cisaillement de 1 à 5 MPa et une rupture 100 % cohésive dans tous les cas.

Le domaine d'application de l'utilisation préconisée par l'invention est avantageusement celui du collage de pièces de construction de véhicules, en particulier automobiles, ou celui du collage de pièces de construction d'appareils électro-ménagers, notamment des machines à laver.

En pratique, les applications collage dans l'automobile peuvent être :

- collage souple de pièces plastiques et métalliques sous le capot moteur et dans l'habitacle,
- collage de blocs optiques,
- sérigraphie des trottoirs de joints de culasses souples et métalliques.

Selon une variante, ce domaine d'application peut également être celui du collage de composants électriques/électroniques, en particulier dans l'électroménager.

Selon un autre de ses aspects, la présente invention vise un procédé de collage d'au moins deux substrats $\mathbf{S_1}$ et $\mathbf{S_2}$ caractérisé en ce qu'il consiste:

- à préparer une composition telle que définie supra et/ou une composition du type de celle mise en oeuvre dans l'utilisation telle que définie supra,
- à appliquer cette composition sur l'une au moins des surfaces de $S_1$ et $S_2$ à coller,
- à assembler l'une à l'autre les surfaces encollées,
- éventuellement à mettre sous presse $\mathbf{S_1/S_2}$;
- et de préférence à chauffer l'assemblage.

L'utilisation d'une composition silicone (**I**) à (**VII**) comme adhésif de même que le procédé de collage suivant l'invention procurent des résultats extrêmement avantageux en terme de force d'adhésion, de stabilité à la conservation avant réticulat ou de stabilité du collage, de propriétés mécaniques, de tenue à la température du collage, de rhéologie avant réticulation adaptée à l'application collage, de capacité de collage de substrats de natures variées et de coût de revient.

Les exemples qui suivent décrivent la préparation de la composition silicone adhésive réticulable selon l'invention et de sa caractérisation au travers des propriétés $\alpha,\beta,\delta,\gamma$. Ces exemples permettront de mieux comprendre l'invention et de faire ressortir ses avantages et ses variantes de réalisation.

**EXEMPLES**

EXEMPLE 1 : COMPOSITION POUR ENDUCTION (comparatif)

Il s'agit d'une composition silicone bicomposante telle que décrite dans le brevet susmentionné.

On prépare tout d'abord une suspension dénommée **prémélange n°1** en mélangeant dans un réacteur à température ambiante :

- 35 parties de résine **(VII)** de structure $MM^{Vi}DD^{Vi}Q$ contenant 0.6 % en poids de groupes vinyles (Vi) et constituée de 17 % en poids de motifs $(CH_3)_3SiO_{0.5}$, 0.5 % en poids de motifs $(CH_3)_2ViSiO_{0.5}$, 75 % en poids de motifs $(CH_3)_2SiO$, 1.5% en poids de motifs $(CH_3)ViSiO$ et 8 % en poids de motifs $SiO_2$
- 23.2 parties en poids d'un PDMS **(I)** bloqué par des motifs $(CH_3)_2ViSiO_{0.5}$ ayant une viscosité de 100000 mPa.s et contenant 0.003 fonction SiVi pour 100g d'huile
- 11.8 parties en poids d'un PDMS **(I)** bloqué par des motifs $(CH_3)_2ViSiO_{0.5}$ ayant une viscosité de 10000 mPa.s et contenant 0.005 fonction SiVi pour 100g d'huile
- 29 parties en poids d'une silice **(V)** broyée de granulométrie moyenne environ 2$\mu$m
- 1 partie en poids d'une silice **(V)** renforçante hydrophobe développant une surface spécifique de l'ordre de 200 $m^2$/g

Cet empatage sert à la préparation des parties A et B du bicomposant

Partie A du bicomposant n°1

Dans un réacteur à température ambiante on mélange:

- 94 parties en poids de prémélange n° 1
- 4 parties en poids d'un poly(diméthyl)(hydrogénométhyl) siloxane (II) bloqué par des motifs $(CH_3)_2HSiO_{0.5}$ ayant

une viscosité de 25 mPa.s et contenant au total 0.7 fonction SiH pour 100g d'huile
- 0.025 partie en poids d'EthynylCycloHexanol (**VI**)
- 1 partie en poids de vinyltriméthoxysilane (VTMO) (**IV.1**)
- 1 partie en poids de 3glycidoxypropyltriméthoxysilane (GLYMO) (IV.2)

Partie B du bicomposant n° 1

Dans un réacteur à température ambiante on mélange:

- 88.3 parties en poids de prémélange n° 1
- 7.6 parties d'un PDMS **(I)** bloqué par des motifs $(CH_3)_2ViSiO_{0.5}$ ayant une viscosité de 100000 mPa.s et contenant 0.003 fonction SiVi pour 100g d'huile
- 4 parties en poids d'orthotitanate de butyle **(IV.3)**
- 0.0215 parties en poids de platine **(III)** métal sous la forme d'un complexe métallique connu sous le nom de catalyseur de Karstedt

Le bicomposant est obtenu en mélangeant à température ambiante 100 parties de **A** et 10 parties de **B.** On obtient ainsi la composition **C1.**

EXEMPLE 2 : COMPOSITION POUR COLLAGE

Il s'agit d'une composition silicone bicomposante dont la composition est particulièrement adaptée au collage.
On prépare tout d'abord une suspension dénommée prémélange n°2 en mélangeant dans un réacteur à température ambiante :

- 51.7 parties de résine de structure $MM^{Vi}DD^{Vi}Q$ **(VII)** contenant 0.9 % en poids de groupes vinyles (Vi) et constituée de 21% en poids de motifs $(CH_3)_3SiO_{0.5}$, 0.2 % en poids de motifs $(CH_3)_2ViSiO_{0.5}$, **67.8** % en poids de motifs $(CH_3)_2SiO$, 3 % en poids de motifs $(CH_3)ViSiO$ et 8 % en poids de motifs $SiO_2$
- 15 parties en poids d'un PDMS **(I)** bloqué par des motifs $(CH_3)_2ViSiO_{0.5}$ ayant une viscosité de 10000 mPa.s et contenant 0.005 fonction SiVi pour 100g d'huile
- 33.3 parties en poids d'une silice **(V)** broyée de granulométrie moyenne environ 2$\mu$m

Cet empatage sert à la préparation des parties **A** et **B** du bicomposant

Partie A du bicomposant n° 1

Dans un réacteur à température ambiante on mélange :

- 90.3 parties en poids de prémélange n°2
- 5.6 parties en poids d'un poly(diméthyl)(hydrogénométhyl) siloxane (**II**) bloqué par des motifs $(CH_3)_2HSiO_{0.5}$ ayant une viscosité de 25 mPa.s et contenant au total 0.7 fonction SiH pour 100g d'huile
- 0.04 partie en poids d'EthynylCycloHexanol (**VI**)
- 1.8 partie en poids de vinyltriméthoxysilane (VTMO) (**IV.1**)
- 1.8 partie en poids de 3glycidoxypropyltriméthoxysilane (GLYMO) (**IV.2a**)

Partie B du bicomposant n° 1

Dans un réacteur à température ambiante on mélange :

- 99.3 parties en poids de prémélange n°2
- 0.7 parties en poids d'orthotitanate de butyle **(IV.3)**
- 0.004 parties en poids de platine **(III)** métal sous la forme d'un complexe métallique connu sous le nom de catalyseur de Karstedt

Le bicomposant est obtenu en mélangeant à température ambiante 100 parties de **A** et 100 parties de **B.** On obtient ainsi la composition **C2.**

EXEMPLE 3 : ALTERNATIVE A LA PREPARATION DU PREMELANGE DE L'EXEMPLE

Dans un réacteur susceptible d'être chauffé sous vide on mélange à froid

- 15 parties en poids d'un PDMS (**I**) bloqué par des motifs $(CH_3)_3ViSiO_{0.5}$, ayant une viscosité de 10000 mPa.s et contenant 0.005 fonction SiVi pour 100g d'huile
- 35 parties en poids d'un PDMS (**I**) bloqué par des motifs $(CH_3)_3ViSiO_{0.5}$, ayant une viscosité de (**I**) 100000 mPa.s et contenant 0.003 fonction SiVi pour 100g d'huile
- 16,7 parties exprimées en sec de résine **(VII)** de structure $MD^{Vi}Q$ préparée en phase xynélique et contenant 2 % en poids de groupes vinyles (Vi) et constitué de 68 % en poids de motifs $(CH_3)_3SiO_{0.5}$, 7 % en poids de motifs $(CH_3)ViSiO$ et 25 % en poids de motifs $SiO_2$
- 33,3 parties en poids d'une silice broyée de granulométrie moyenne environ 2 μm.

Le réacteur est alors mis en dépression (15 mm Hg) et la température portée à 150° C jusqu'à élimination du solvant.

On obtient un prémélange n° 2 similaire au précédent.

EXEMPLE 4 : PERFORMANCES

*4.1 ADHERENCE*

Les performances adhésives (Force de collage Fp) des bicomposants **C1 C2** des exemples 1 et 2 sont évaluées par un test de pelage Tp.

Pour cela on dépose une couche d'épaisseur contrôlée du bicomposant entre deux substrats et on procède à la réticulation du bicomposant.

Après un refroidissement on mesure la force nécessaire à provoquer le décollement des substrats au moyen d'une machine de traction dotée d'un dispositif d'enregistrement de la force exercée.

*4. 1.1 SUBSTRATS POLYMERES PLASTIQUES*

Divers substrats ont été testés :

- Sa = un tissu de polyamide 66 de 235 dtex tissé à 28*27 brins (c'est-à-dire 28 brins par cm dans la chaîne et 27 brins par cm dans la trame)
- Sb = un tissu de polyester PET de 140dtex tissé à 28*27 brins (c'est-à-dire 28 brins par cm dans la chaîne et 27 brins par cm dans la trame)
- Sc = un film plat de PET

Les résultats suivants ont été enregistrés :

TABLEAU 1

| Bicomposant | substrat 1 | substrat 2 | poids surfacique g/m$^2$ | force de pelage N/mm |
|---|---|---|---|---|
| C1 | Sa | Sa | 50 | 0.15 |
| C2 | Sa | Sa | 50 | 0.70 |
| C1 | Sb | Sb | 60 | 0.10 |
| C1 | Sb | Sb | 100 | 0.25 |
| C2 | Sb | Sb | 60 | 0.20 |
| C2 | Sb | Sb | 100 | 0.45 |
| C1 | Sa | Sc | 60 | 0.20 |
| C2 | Sa | Sc | 60 | 0.60 |

Les résultats présentés démontrent l'avantage très net du bicomposant **C2.**

La composition **C2** permet également le collage sur métal, notamment l'aluminium et les plastiques, notamment

les résines époxy.

Parmi les avantages il s'avère aussi que cette colle à prise rapide à chaud (10 à 180 secondes à 160°C par exemple) est stable pendant plusieurs jours à température ambiante.

Cette colle est beaucoup plus facilement manipulable à froid et beaucoup plus rapide à chaud que d'autres colles telles que les colles à froid CAF (Silicones vulcanisables à froid monocomposant) et éventuellement bicomposants accélérés. La composition **C2** est adaptable à de nombreuses applications comme les domaines de l'automobile et de l'électroménager.

Par rapport à d'autres colles organiques, la composition **C2** permet un collage non fusible qui résiste notamment jusqu'à 225°C.

### *4.1.2 SUBSTRATS METALLIQUES*

*4.1.2.1. Evaluation de l'adhérence sur aluminium*

L'adhérence est mesurée par un test en cisaillement (ASTM - 624 - A).

*- A - Principes*

Un joint parallélépipède de silicone de 1 mm d'épaisseur est appliqué entre deux stérigmes. L'éprouvette ainsi obtenue, après un temps de réticulation dans une enceinte à 150° C, est soumise à une sollicitation en traction-cisaillement. La liaison est caractérisée par la contrainte et le type de rupture (cohésif, adhésif...).

*- B - Réactifs*

Méthyl éthylcétone, ou alcool, ou solvant similaire.

*- C - Appareillage*

(i) Stérigmes ALU AG3 de 100 x 25 x 4 en mm, percée à une extrémité d'un trou de diamètre de 10 mm pour permettre l'accrochage des éprouvettes aux mors de l'appareil de traction.

Les stérigmes doivent être préalablement nettoyés avec de la méthyl éthylcétone ou un solvant approprié.

Dans le cas d'utilisation d'un primaire d'adhérence : faire un léger traitement abrasif, des surfaces de recouvrement, pour éliminer la couche superficielle d'oxyde.

*(ii) Gabarit*

Support en aluminium permettant la confection des éprouvettes avec une partie en téflon au niveau du joint silicone pour éviter l'adhérence de l'élastomère sur le bloc support.

Ce gabarit permet la confection d'un joint de 1 mm d'épaisseur et dont la surface de collage est de 25 mm x 12,5 mm.

*(iii)* Enceinte conditionnée 150° C.

*(iv).* Dynamomètre type ZWICK dont la vitesse est de 10 mm/min ± 2 mm/min équipé de mâchoires permettant la traction de l'éprouvette.

*- D - Mode opératoire*

*(i) Préparation des éprouvettes*

a Préparer les stérigmes et le gabarit dans les conditions du paragraphe C.
b Prévoir trois éprouvettes pour chaque détermination.
c Disposer les stérigmes inférieurs et les bloquer.
d Puis en opérant éprouvette par éprouvette :

- Déposer sur le stérigme inférieur et supérieur une quantité suffisante de produit (légèrement excédentaire) en évitant toute inclusion d'air.
- Placer ensuite le stérigme supérieur et presser uniformément jusqu'au contact du gabarit en s'assurant qu'on obtienne un léger débordement sur toute la longueur du collage.

e Lorsque le collage des éprouvettes est terminé bloquer modérément les brides de maintien des stérigmes supérieurs.
f Mettre les éprouvettes à réticuler dans une enceinte conditionnée 150° C.
g Après réticulation, démouler les éprouvettes.
h Poursuivre le cycle de polymérisation dans les conditions préconisées pour le produit en les maintenant en position horizontale dans l'enceinte conditionnée.

*(ii) Essai de traction*

Sur chaque éprouvette procéder à la décohésion des bavures éventuelles en entaillant celle-ci à l'aide d'un outil tranchant.
Pour la traction, se reporter aux consignes d'utilisation du dynamomètre.

*- E - Calcul*

Soit A la surface en $mm^2$, de recouvrement des stérigmes.
Soit F la force en NEWTON à la rupture.
Soit R la résistance en mégapascals, à la rupture.

Calculer $R = \frac{F}{S}$

Nota :

La surface S est normalement de 312,5 $mm^2$, les consignes d'utilisation du dynamomètre prévoit la possibilité de calculer la contrainte à la rupture, à partir de la surface corrigée.
Calculer la valeur moyenne de la contrainte de rupture pour les trois éprouvettes ; l'écart entre la valeur minimale et la valeur maximale doit être inférieur à 20 % de la valeur moyenne. Dans le cas contraire, effectuer une nouvelle détermination sur trois éprouvettes.
Puis apprécier après un examen visuel, le mode de rupture en pourcentage de cohésion :

- 100 % cohésif : la rupture se produit dans la masse du joint.
- 0 % cohésif : la rupture s'est effectuée uniquement sur une des faces du support.

Les plaques support sont en aluminium brut AG3 de dimensions 100 x 25 x 4 mm.
La composition **C2** est disposée entre deux de ces plaques de façon à créer un joint de 1 mm d'épaisseur qui occupe une surface de 25 x 25 mm.
La consolidation de l'assemblage intervient par chauffage à 150° C pendant 2 H.
L'adhérence est mesurée au moyen d'un dynamomètre ; on exprime la résistance à la rupture de l'assemblage en MPa et le taux de rupture cohésive ou adhésive.
Dans le cas de la composition C2 on a obtenu :

contrainte de rupture = 5 MPa
taux de rupture cohésive = 100 %.

*4.1.2.2 EVALUATION DE L'ADHERENCE SUR ACIER*

L'adhérence est mesurée d'une part par un test en cisaillement (norme ASTM-624-A) et d'autre part par un test de résistance au pelage à 180° (norme NFT-46008).
L'acier mis en oeuvre est celui commercialisé sous la dénomination SOLLAC R1426®.

*(1) Préparation des éprouvettes*

A) Test en cisaillement

- 1$^{ère}$ étape: sur une première bande d'acier de 500 μm d'épaisseur, longue de 150 mm et large de 25 mm, on positionne, à 90° par rapport à la bande d'acier, deux cales en acier inoxydable de 50 μm d'épaisseur et larges de 10 mm. La première à l'une des extrémités de la bande d'acier, la seconde, à une distance de 60 mm de la première.
- 2$^{ème}$ étape : Préparation du "sandwich" Acier/Colle silicone/Acier.
  On dépose sur cette première bande d'acier, entre les deux cales, un excès de colle silicone de composition C2. Une seconde bande d'acier, de même dimension, est posée dans le prolongement de la première, de façon à ne recouvrir que l'ensemble formé par les cales et la colle. C'est la surface, enduite de colle, qui servira au calcul des forces d'adhérence. De cette façon, environ la moitié de chaque bande d'acier se retrouve exempte de colle. C'est sur ces parties non recouvertes de silicones que viendront s'accrocher les mors du dynamomètre pour évaluer l'adhérence par cisaillement.
- 3$^{ème}$ étape : Etuvage du "sandwich" à 150°C pendant 1 minute.
- 4$^{éme}$ étape : Réticulation de la colle silicone, sous presse chauffante à 200°C, pendant 2 minutes, sous 700 à 900 MPa de pression.

B) Test de résistance au pelage

- 1$^{ère}$ étape : Sur une première bande d'acier de 500 μm d'épaisseur, longue de 150 mm et large de 25 mm, on positionne, à 90° par rapport à la bande d'acier, deux cales en acier inoxydable de 50 μm d'épaisseur et larges de 10 mm. La première à l'une des extrémités de la bande d'acier, la seconde, à une distance de 10 cm de la première.
- 2$^{ème}$ étape: Préparation du "sandwich" Acier/Colle silicone/Acier.
  On dépose sur cette première bande d'acier, entre les deux cales, un excès de colle silicone de composition C2. Une seconde bande d'acier, de même dimension, est apposée sur la première bande, de telle façon qu'elle se superpose exactement à cette dernière, mais, en en étant séparée, par l'ensemble formé par les cales et la colle. C'est la surface enduite de colle, qui servira au calcul des forces d'adhérence. De cette façon, environ la moitié de chaque bande d'acier se retrouve exempte de colle.
- 3$^{ème}$ étape: Etuvage du "sandwich" à 150°C pendant 1 minute.
- 4$^{ème}$ étape : Réticulation de la colle silicone, sous presse chauffante à 200°C, pendant 2 minutes, sous 700 à 900 MPa de pression.
- 5$^{ème}$ étape : Les parties exemptes de colle sont pliées à 90°, de façon symétrique. Ces deux parties se retrouvent alors dans le prolongement l'une de l'autre en formant un angle de 180°. Elles serviront de points de prise aux mors du dynamomètre pour évaluer l'adhérence par pelage à 180°.

*(2) Evaluation de l'adhérence*

Dans les deux tests réalisés, l'évaluation est opérée à l'aide du dynamomètre de type ZWICK dans les conditions mentionnées ci-avant au paragraphe *4.1.2.1/(iv).*

*(3) Expression des résultats*

A) Test en cisaillement

La valeur moyenne de la résistance à la rupture, R = F/S où F est la force de traction en Newton du mors mobile au moment de la rupture et S est la surface en $mm^2$ du recouvrement entre les deux plaques (ou surface de la colle silicone au contact d'une plaque, soit 1500 $mm^2$), est égale à 2,3 Mpa.

B) Test de pelage à 180°

Le résultat est exprimé en N/mm. Il est donné par la valeur du rapport F/L où F est la force de traction en Newton du mors mobile, mesurée au sommet de la courbe donnant la force de traction F en fonction du déplacement L du mors mobile exprimé en mm. La valeur moyenne du rapport F/L est égale à 7,25 N/mm.

## Revendications

**1.** - Utilisation d'une composition silicone adhésive et réticulable pour coller des substrats en métal, en polymère thermoplastique ou thermodurcissable, ladite composition comprenant dans les proportions suivantes, en % en poids sur sec par rapport à la masse totale :

(**I**) 1 à 80 % d'au moins un polyorganosiloxane (**POS I**) présentant, par molécule, au moins deux groupes alcényles liés au silicium ;
(**II**) 0,1 à 20 % d'au moins un polyorganosiloxane (**POS II**) présentant, par molécule, au moins trois atomes d'hydrogène liés au silicium ;
(**III**) 0,0002 à 0,04 % d'une quantité catalytiquement efficace d'au moins un catalyseur, composé d'au moins un métal appartenant au groupe du platine,
(**IV**) un promoteur d'adhérence à base de :

- **(IV.1)** 0,01 à 5 % d'au moins un organosilane alcoxylé contenant, par molécule, au moins un groupe alcényle en $C_2$-$C_6$,
- **(IV.2a)** 0,01 à 5 % d'au moins un composé organosilicié de formule générale suivante :

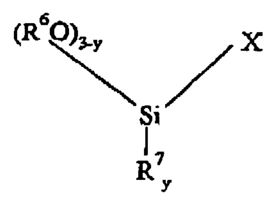

(IV.2a)

dans laquelle :

. $R^6$ est un radical alkyle linéaire ou ramifié en $C_1$-$C_4$,
. $R^7$ est un radical alkyle linéaire ou ramifié
. y est égal à 0, 1, 2 ou 3, de préférence à 0 ou 1 et, plus préférentiellement encore à 0,

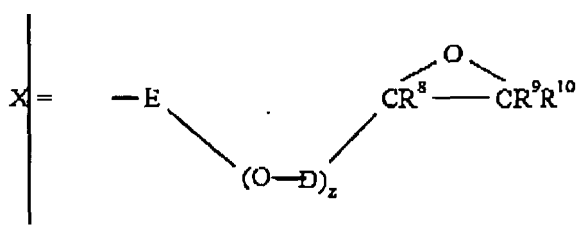

avec

- E et D qui sont des radicaux identiques ou différents choisis parmi les alkylènes en $C_1$-$C_4$ linéaires ou ramifiés,
- z qui est égal à 0 ou 1,
- $R^8$ $R^9$, $R^{10}$ qui sont des radicaux identiques ou différents représentant l'hydrogène ou un alkyle linéaire ou ramifié en $C_1$-$C_4$, l'hydrogène étant plus particulièrement préféré,
- $R^8$, $R^9$, $R^{10}$ pouvant alternativement constituer ensemble avec les deux carbones porteurs de l'époxy, un cycle alkyle ayant de 5 à 7 chaînons,
- **(IV.3)** 0,01 à 3 d'au moins un chélate de métal M et/ou un alcoxyde métallique de formule générale : M $(OJ)_n$, avec n = valence de M et J = alkyle linéaire ou ramifié en $C_1$ - $C_8$,

**(V)** 0 à 60 % d'une charge minérale,
**(VI)** 0 à 0,5 % d'au moins un inhibiteur de réticulation, et
**(VII)** 5 à 60 % d'au moins une résine polyorganosiloxane **(POS VII)** porteuse de motifs siloxyles Q et/ou T et de groupes alcényles, ladite résine participant à l'établissement des propriétés rhéologiques, mécaniques et adhésives de la composition ; ladite composition présentant les caractéristiques suivantes:

- α- sa force de pelage $F_p$ (N/mm) mesurée dans un test $T_p$, supérieur ou égale à 0,25,
- δ- sa résistance à la déchirure $R_d$ (N/mm) après réticulation, mesurée par un test Td (ASTM - 624A), supérieure ou égale à 6, et
- γ- sa dureté SHORE A, ci-après dénommée dureté D, après réticulation ; mesurée par un test $T_S$ (DIN 5335), supérieure ou égale à 35, ladite composition étant **caractérisée en ce que** :
- β- sa viscosité η juste après mélange de tous ses constituants, est comprise entre 50 000 et 300 000 mPa.s à 25° C;

ladite viscosité étant ajustée en faisant varier la longueur de chaîne et le poids moléculaire des **POS I** et/ou **II**, en ajustant la concentration du **POS II** réticulant et/ou le nombre de sites SiH qu'il comporte, en choisissant des concentrations plus ou moins élevées en catalyseurs / ou en mettant en oeuvre une résine POS **VII** alcénylée, par exemple vinylée ayant un réseau de réticulation plus ou moins dense en fonction de la quantité de motifs siloxyles Q et/ou T = $CH_3SiO_{1,5}$.

**2.** **-** Utilisation selon la revendication 1, **caractérisée en ce que** la force de pelage $F_p$ (N/mm) mesurée dans un test de pelage $T_p$, est supérieure ou égale à 0,50.

**3.** **-** Utilisation selon la revendication 1 dans laquelle l'organosiloxane alcoxylé **(IV.1)** du promoteur **(IV)** répond à la formule générale suivante :

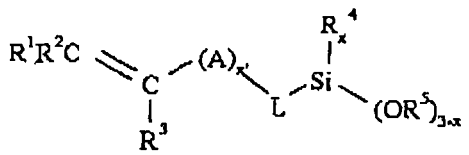

**(IV.1)**

dans laquelle.

- $R^1$, $R^2$, $R^3$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- A est un alkylène linéaire ou ramifié en $C_1$-$C_4$,
- L est un lien valenciel ou l'oxygène,
- $R^4$ et $R^5$ sont des radicaux identiques ou différents et représentent un alkyle en $C_1$-$C_4$ linéaire ou ramifié,
- x'=0 ou 1,
- x = 0 à 4, de préférence 0 ou 1 et plus préférentiellement encore 0.

**4.** - Utilisation selon la revendication 1 **caractérisée en ce que** le métal M du chélate et/ou de l'alcoxyde (**IV3**) est choisi dans la liste suivante : Ti, Zr, Ge, Li, Mn, le Ti étant plus particulièrement préféré.

**5.** - Utilisation selon l'une des revendications précédentes dans laquelle le promoteur d'adhérence comprend :

- du vinyltrieméthoxysilane (VTMS) **(IV.1),**
- du 3-Glycidoxypropyltriméthoxysilane (GLYMO) **(IV.2a),** et
- du titanate de butyle (**IV.3**).

**6.** - Utilisation selon l'une des revendications précédentes dans laquelle les proportions pondérales entre (**IV.1**)**,** (**IV. 2a**) et (**IV.3**), exprimée en % en poids par rapport au total des trois, sont les suivantes :

(**IV.1**) compris entre 15 et 70 et de préférence entre 30 et 50,
**(IV. 2a**) compris entre 15 et 70 et de préférence entre 30 et 50,
(**IV.3**) compris entre 5 et 25 et de préférence entre 10 et 20.

et de manière plus préférée encore le ratio pondéral **(IV.2) : (IV.1)** est compris entre 2 : 1 et 0,5 : 1, le ratio 1 : 1 étant plus particulièrement préféré.

**7.** - Utilisation selon l'une des revendications précédentes dans laquelle le promoteur d'adhérence est présent à raison de 0,1 à 10, de préférence 0,5 à 8 et plus préférentiellement encore 1 à 5 % en poids par rapport à l'ensemble des constituants.

**8.** - Utilisation selon l'une des revendications précédentes dans laquelle la résine insaturée (**VII**) comprend au moins deux vinyles par molécule et répond à l'une des deux formules suivantes :

(**VII.1**) $MM^{Vi}DD^{Vi}Q$

ou

(**VII.2**) $MD^{Vi}Q$

**9.** - Utilisation selon l'une des revendications précédentes **caractérisée en ce que** la résine (**VII**) contient des motifs Q à raison
d'au moins 5 %,
de préférence au moins 7 %,
et plus préférentiellement encore à raison de 8 à 30 %.

**10.** - Utilisation selon l'une des revendications précédentes dans laquelle les constituants (**I**) à (**VII**) sont mis en oeuvre dans les proportions suivantes, en % en poids sur sec par rapport à la masse totale :

| | |
|---|---|
| (**I**) | 10 à 60 |
| (**II**) | 0,5. à 10 |
| (**III**) | 0,005 à 0,02 |
| (**IV.1**) | 0,05 à 2 |
| (**IV.2a**) | 0,05 à 2 |
| (**IV.3**) | 0,1 à 1 |
| (**V**) | 10 à 40 |
| (**VI**) | 0,05 à 0,3 |
| (**VII**) | 5 à 60. |

**11.** - Utilisation selon l'une des revendications précédentes dans laquelle les proportions de (**I**) et de (**II**) sont telles que le rapport molaire des atomes d'hydrogène liés au silicium dans (**II**) sur les radicaux alcényles liés au silicium dans (**I**) est compris entre 0,4 et 10, de préférence entre 0,8 et 3.

**12.** - Utilisation d'une composition selon l'une des revendications 1 à 11 dans le domaine d'application du collage de pièces de construction de véhicules, en particulier automobiles, ou celui du collage de pièces de construction d'appareils électroménagers, notamment des machines à laver.

**13.** - Utilisation d'une composition selon l'une des revendications 1 à 11, dans le domaine d'application du collage de composants électriques/électroniques, en particulier dans l'électroménager.

**14.** - Procédé de collage d'au moins deux substrats $S_1$ et $S_2$ **caractérisé en ce qu'**il consiste

- à préparer une composition selon l'une quelconque des revendications 1 à 12
- à appliquer cette composition sur l'une au moins des surfaces de $S_1$ et $S_2$ à coller,
- à assembler l'une à l'autre les surfaces encollées,
- éventuellement à mettre sous presse $S_1/S_2$ ; et
- de préférence à chauffer l'assemblage.

## Claims

**1.** Use of an adhesive crosslinkable silicone composition for bonding metallic or thermoplastic or thermosetting polymer

substrates, the said composition comprising in the following proportions, as dry weight percentages relative to the total mass:

(I) 1% to 80% of at least one polyorganosiloxane (POS I) containing, per molecule, at least two alkenyl groups linked to the silicon,
(II) 0.1% to 20% of at least one polyorganosiloxane (POS II) containing, per molecule, at least three hydrogen atoms linked to the silicon,
(III) 0.0002% to 0.04% of a catalytically effective amount of at least one catalyst, composed of at least one metal belonging to the platinum group,
(IV) an adhesion promoter based on:

- (IV.1) 0.01% to 5% of at least one alkoxylated organosilane containing, per molecule, at least one $C_2$-$C_6$ alkenyl group,
- (IV. 2a) 0.01% to 5% of at least one organosilicon compound of the following general formula:

(IV.2a)

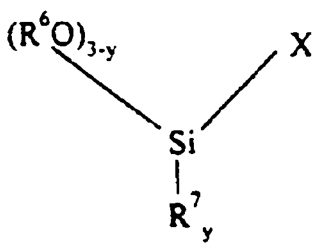

in which:

• $R^6$ is a linear or branched $C_1$-$C_4$ alkyl radical,
• $R^7$ is a linear or branched alkyl radical,
• y is equal to 0, 1, 2 or 3, preferably equal to 0 or 1 and even more preferably equal to 0,

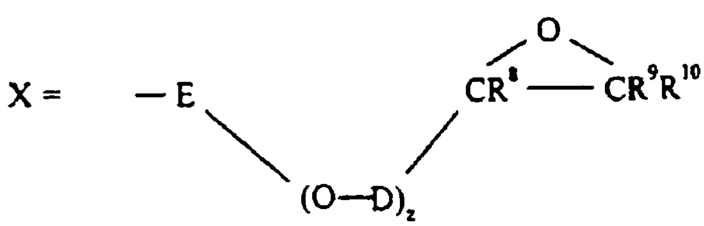

with

- E and D which are identical or different radicals chosen from linear or branched $C_1$-$C_4$ alkylenes,
- z which is equal to 0 or 1,
- $R^8$, $R^9$ and $R^{10}$ which are identical or different radicals representing hydrogen or a linear or branched $C_1$-$C_4$ alkyl, hydrogen being more particularly preferred,
- $R^8$, $R^9$ and $R^{10}$ optionally being able to constitute, together with the two carbons bearing the epoxy, a 5- to 7-membered alkyl ring,
- (IV.3) 0.01% to 3% of at least one chelate of a metal M and/or a metal alkoxide of general formula: M $(OJ)_n$, where n = valency of M and J = linear or branched $C_1$-$C_8$ alkyl,

(V) 0 to 60% of an inorganic filler,
(VI) 0 to 0.5% of at least one crosslinking inhibitor, and
(VII) 5% to 60% of at least one polyorganosiloxane resin (POS VII) bearing siloxyl units Q and/or T and alkenyl groups, the said resin participating in the establishment of the rheological, mechanical and adhesive properties of the composition;
the said composition having the following characteristics:

- α - its peeling force Fp (N/mm), measured in a test Tp, of greater than or equal to 0.25,
- δ - its tear strength $R_d$ (N/mm) after crosslinking, measured by a test Td (ASTM-624A), of greater than or equal to 6, and
- γ - its Shore A hardness, referred to hereinbelow as the hardness D, after crosslinking, measured by a test $T_S$ (DIN 5335), of greater than or equal to 35,

the said composition being **characterized in that**:

- β- its viscosity η, immediately after mixing together all of its constituents, is between 50 000 and 300 000 mPa.s at 25˚C;

the said viscosity being adjusted by varying the chain length and the molecular weight of the POS I and/or II, by adjusting the concentration of the crosslinking POS II and/or the number of SiH sites that it comprises, by selecting more or less high concentrations of catalysts and/or by using a POS VII resin that is alkenylated, for example vinylated, having a more or less dense crosslinking network as a function of the amount of siloxyl units Q and/or T = $CH_3SiO_{1.5}$.

**2.** Use according to Claim 1, **characterized in that** the peeling force Fp (N/mm) measured in a peeling test $T_p$ is greater than or equal to 0.50.

**3.** Use according to Claim 1, in which the alkoxylated organosiloxane (IV.1) of the promoter (IV) corresponds to the following general formula:

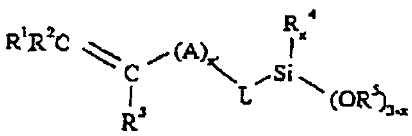

(IV.1)

in which:

- $R^1$, $R^2$ and $R^3$ are hydrogen or identical or different hydrocarbon-based radicals and preferably represent hydrogen, a linear or branched $C_1$-$C_4$ alkyl or a phenyl optionally substituted with at least one $C_1$-$C_3$ alkyl,
- A is a linear or branched $C_1$-$C_4$ alkylene,
- L is a valency bond or oxygen,
- $R^4$ and $R^5$ are identical or different radicals and represent a linear or branched $C_1$-$C_4$ alkyl,
- x' = 0 or 1,
- x = 0 to 4, preferably 0 or 1 and even more preferably 0.

**4.** Use according to Claim 1, **characterized in that** the metal M of the chelate and/or of the alkoxide (IV.3) is chosen from the following list: Ti, Zr, Ge, Li and Mn, Ti being more particularly preferred.

**5.** Use according to one of the preceding claims, in which the adhesion promoter comprises:

- vinyltrimethoxysilane (VTMS) (IV.1),
- 3-glycidoxypropyltrimethoxysilane (GLYMO) (IV.2a), and
- butyl titanate (IV.3).

**6.** Use according to one of the preceding claims, in which the weight proportions between (IV.1), (IV.2a) and (IV.3), expressed as weight percentages relative to the total of the three, are as follows:

(IV.1) between 15 and 70 and preferably between 30 and 50,
(IV.2a) between 15 and 70 and preferably between 30 and 50,
(IV.3) between 5 and 25 and preferably between 10 and 20,

and even more preferably the weight ratio (IV.2):(IV.1) is between 2:1 and 0.5:1, the ratio 1:1 being more particularly

preferred.

**7.** Use according to one of the preceding claims, in which the adhesion promoter is present in a proportion of from 0.1 to 10, preferably 0.5 to 8 and even more preferably 1 to 5%, by weight relative to all of the constituents.

**8.** Use according to one of the preceding claims, in which the unsaturated resin (VII) comprises at least two vinyls per molecule and corresponds to one of the following two formulae:

(VII.1) $MM^{Vi}DD^{Vi}Q$

or

(VII.2) $MD^{Vi}Q$

**9.** Use according to one of the preceding claims, **characterized in that** the resin (VII) contains units Q in a proportion of at least 5%,
preferably at least 7%, and
even more preferably in a proportion of from 8 to 30%.

**10.** Use according to one of the preceding claims, in which the constituents (I) to (VII) are used in the following proportions, as dry weight percentages relative to the total mass:

| | |
|---|---|
| (I) | 10 to 60 |
| (II) | 0.5 to 10 |
| (III) | 0.005 to 0.02 |
| (IV.1) | 0.05 to 2 |
| (IV.2a) | 0.05 to 2 |
| (IV.3) | 0.1 to 1 |
| (V) | 10 to 40 |
| (VI) | 0.05 to 0.3 |
| (VII) | 5 to 60. |

**11.** Use according to one of the preceding claims, in which the proportions of (I) and (II) are such that the molar ratio of the hydrogen atoms linked to the silicon in (II) to the alkenyl radicals linked to the silicon in (I) is between 0.4 and 10, preferably between 0.8 and 3.

**12.** Use of a composition according to one of Claims 1 to 11, in the field of application of the adhesive bonding of construction components for vehicles, in particular motor vehicles or that of the adhesive bonding of construction components for household appliances, in particular washing machines.

**13.** Use of a composition according to one of Claims 1 to 11, in the field of application of the adhesive bonding of electrical/electronic components, in particular in household appliances.

**14.** Process for adhesively bonding at least two substrates $S_1$ and $S_2$, **characterized in that** it consists:

- in preparing a composition according to any one of Claims 1 to 12,
- in applying this composition to at least one of the surfaces of $S_1$ and $S_2$ to be adhesively bonded,
- in fitting the bonded surfaces together,
- optionally, in placing $S_1/S_2$ under a press, and
- preferably, in heating the assembly.

**Patentansprüche**

**1.** Verwendung einer adhäsiven und vernetzbaren Silicon-Zusammensetzung zum Verkleben von Substraten aus

Metall, aus thermoplastischem oder thermohärtbarem Polymer, wobei die genannte Zusammensetzung in den folgenden Anteilen in Gew.-% trocken, bezogen auf die Gesamtmasse, umfasst:

(I) 1 bis 80 % von mindestens einem Polyorganosiloxan (POS I), das pro Molekül mindestens zwei Alkenylgruppen aufweist, gebunden an das Silicium;
(II) 0,1 bis 20 % von mindestens einem Polyorganosiloxan (POS II), das pro Molekül mindestens drei Wasserstoffatome aufweist, gebunden an das Silicium;
(III) 0,0002 bis 0,04 % einer katalytisch wirksamen Menge von mindestens einem Katalysator, zusammengesetzt aus mindestens einem Metall, das aus der Platingruppe stammt;
(IV) einen Haftungspromotor auf der Basis von:

- (IV.1) 0,01 bis 5 % von mindestens einem alkoxylierten Organosilan, das pro Molekül mindestens eine Alkenylgruppe mit 2 bis 6 Kohlenstoffatomen enthält,
- (IV.2a) 0,01 bis 5 % von mindestens einer OrganosiliciumVerbindung der folgenden allgemeinen Formel:

(IV.2a) 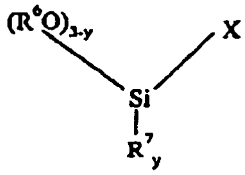

in der

. $R^6$ ein linearer oder verzweigter Rest Alkyl mit 1 bis 4 Kohlenstoffatomen ist,
. $R^7$ ein linearer oder verzweigter Rest Alkyl ist,
. y gleich 0, 1, 2 oder 3 ist, vorzugsweise 0 oder 1 und noch mehr bevorzugt 0,

X = 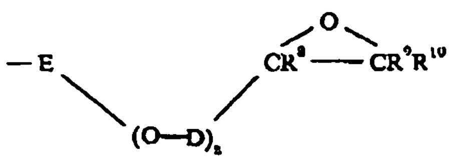

ist, mit

- E und D, die gleiche oder verschiedene Reste darstellen, ausgewählt unter den linearen oder verzweigten Alkylenen mit 1 bis 4 Kohlenstoffatomen
- z, das gleich 0 oder 1 ist,
- $R^8$, $R^9$, $R^{10}$, die gleiche oder verschiedene Reste sind und Wasserstoff oder lineares oder verzweigtes Alkyl mit 1 bis 4 Kohlenstoffatomen darstellen, wobei Wasserstoff ganz besonders bevorzugt ist,
- $R^8$, $R^9$, $R^{10}$, die alternativ zusammen mit den zwei Kohlenstoffen, die das Epoxy tragen, einen Ring Alkyl mit 5 bis 7 Kettengliedern bilden können,
- (IV.3) 0,01 bis 3 von mindestens einem Chelat des Metalls M und/oder einem metallischen Alkoxyd der allgemeinen Formel: $M(OJ)_n$ mit n = Valenz von M und J = lineares oder verzweigtes Alkyl mit 1 bis 8 Kohlenstoffatomen,

(V) 0 bis 60 % von einem mineralischen Füllstoff,
(VI) 0 bis 0,5 % von mindestens einem Vernetzungs-Inhibitor, und
(VII) 5 bis 60 % von mindestens einem Polyorganosiloxan-Harz (POS VII) als Träger von Struktureinheiten Siloxyl Q und/oder T und Alkenylgruppen, wobei sich das genannte Harz an der Einrichtung der rheologischen, mechanischen und adhäsiven Eigenschaften der Zusammensetzung beteiligt; wobei die genannte Zusammensetzung die folgenden Charakteristiken aufweist:

- $\alpha$ - ihre Ablösekraft $F_p$ (N/mm), gemessen in einem Test Tp, von höher oder gleich 0,25,

- δ - ihre Zerreißfestigkeit $R_d$ (N/mm) nach der Vernetzung, gemessen durch einen Test Td (ASTM-624A), von höher oder gleich 6, und
- γ - ihre Härte SHORE A, nachstehend mit Härte D bezeichnet, nach der Vernetzung, gemessen durch einen Test $T_S$ (DIN 5335), von höher oder gleich 35,

und wobei die genannte Zusammensetzung **dadurch gekennzeichnet ist, dass**

- β - ihre Viskosität η, unmittelbar nach dem Vermischen von allen ihrer Bestandteile, zwischen einschließlich 50.000 und 300.000 mPa.s bei 25 °C beträgt;

wobei die genannte Viskosität in der Weise eingestellt wird, dass man die Kettenlänge und das Molekulargewicht der POS I und/oder II variiert, indem man die Konzentration des vernetzenden POS II und/oder die Anzahl der Bereiche SiH, die es trägt, einregelt und man mehr oder weniger hohe Konzentrationen an Katalysator auswählt, oder indem man ein alkenyliertes Harz POS VII einsetzt, beispielsweise ein vinyliertes, das ein mehr oder weniger dichtes Vernetzungsgerüst in Abhängigkeit von der Menge an Struktureinheiten Siloxyl Q und/oder T = $CH_3SiO_{1,5}$ besitzt.

**2.** Verwendung nach Anspruch 1, **dadurch gekennzeichnet, dass** die Ablösekraft Fp (N/mm), gemessen in einem Ablösetest Tp, höher oder gleich 0,50 beträgt.

**3.** Verwendung nach Anspruch 1, worin das alkoxylierte Organosiloxan (IV.1) des Haftungspromotors (IV) der folgenden allgemeinen Formel entspricht:

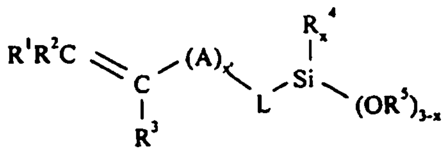

(IV.1)

in der

- $R^1$, $R^2$, $R^3$ Wasserstoff-Reste oder Kohlenwasserstoff-Reste sind, untereinander gleich oder verschieden und vorzugsweise darstellend Wasserstoff, ein lineares oder verzweigtes Alkyl mit 1 bis 4 Kohlenstoffatomen oder ein Phenyl, gegebenenfalls substituiert durch mindestens ein Alkyl mit 1 bis 3 Kohlenstoffatomen,
- A ein lineares oder verzweigtes Alkylen mit 1 bis 4 Kohlenstoffatomen ist,
- L eine Valenzbindung oder Sauerstoff darstellt,
- $R^4$ und $R^5$ gleiche oder verschiedene Reste sind und ein lineares oder verzweigtes Alkyl mit 1 bis 4 Kohlenstoffatomen darstellen,
- $x^1$ = 0 oder 1 ist,
- x = 0 bis 4 ist, vorzugsweise 0 oder 1 und noch mehr bevorzugt 0.

**4.** Verwendung nach Anspruch 1, **dadurch gekennzeichnet, dass** das Metall M des Chelats und/oder des Alkoxyds (IV.3) aus der folgenden Aufstellung gewählt wird: Ti, Zr, Ge, Li, Mn, wobei das Ti ganz besonders bevorzugt ist.

**5.** Verwendung nach einem der vorstehenden Ansprüche, worin der Haftungspromotor umfasst:

- Vinyltrimethoxysilan (VTMS)(IV.1),
- 3-Glycidoxypropyltrimethoxysilan (GLYMO) (IV.2a), und
- Butyltitanat (IV.3).

**6.** Verwendung nach einem der vorstehenden Ansprüche, worin die Gewichtsverhältnisse zwischen (IV.1), (IV.2a) und (IV.3), ausgedrückt in Gewichtsprozent und bezogen auf die Gesamtheit der drei Bestandteile, die folgenden sind:

(IV.1) zwischen einschließlich 15 und 70 und vorzugsweise zwischen 30 und 50,

(IV.2a) zwischen einschließlich 15 und 70 und vorzugsweise zwischen 30 und 50,
(IV.3) zwischen einschließlich 5 und 25 und vorzugsweise zwischen 10 und 20,

und in noch mehr bevorzugter Weise beträgt das Gewichtsverhältnis (IV.2) : (IV.1) zwischen einschließlich 2:1 und 0,5:1, wobei das Verhältnis 1:1 ganz besonders bevorzugt ist.

**7.** Verwendung nach einem der vorstehenden Ansprüche, worin der Haftungspromotor in einem Verhältnis von 0,1 bis 10, vorzugsweise 0,5 bis 8 und noch mehr bevorzugt 1 bis 5 Gew.-% anwesend ist, bezogen auf die Gesamtheit der Bestandteile.

**8.** Verwendung nach einem der vorstehenden Ansprüche, worin das ungesättigte Harz (VII) mindestens zwei Vinyle pro Molekül umfasst und einer der zwei folgenden Formeln entspricht:

(VII.1) $MM^{Vi}DD^{Vi}Q$

oder

(VII.2) $MD^{Vi}Q$

**9.** Verwendung nach einem der vorstehenden Ansprüche, **dadurch gekennzeichnet, dass** das Harz (VII) Struktureinheiten Q enthält, im Verhältnis
von mindestens 5 %,
vorzugsweise mindestens 7 %,
und noch mehr bevorzugt im Verhältnis von 8 bis 30 %.

**10.** Verwendung nach einem der vorstehenden Ansprüche, worin die Bestandteile (I) bis (VII) in den folgenden Verhältnissen eingesetzt werden, in Gewichtsprozent trocken, bezogen auf die Gesamtmasse:

| | |
|---|---|
| (I) | 10 bis 60 |
| (II) | 0,5 bis 10 |
| (III) | 0,005 bis 0,2 |
| (IV.1) | 0,05 bis 2 |
| (IV.2a) | 0,05 bis 2 |
| (IV.3) | 0,1 bis 1 |
| (V) | 10 bis 40 |
| (VI) | 0,05 bis 0,3 |
| (VII) | 5 bis 60. |

**11.** Verwendung nach einem der vorstehenden Ansprüche, worin die Verhältnisse von (I) und (II) derart sind, dass das molare Verhältnis der an das Silicium gebundenen Wasserstoffatome in (II) zu den an das Silicium gebundenen Alkenylresten in (I) zwischen einschließlich 0,4 und 10, vorzugsweise zwischen 0,8 und 3 beträgt.

**12.** Verwendung einer Zusammensetzung nach einem der Ansprüche 1 bis 11 auf dem Gebiet der Anwendung des Verklebens von Konstruktionsteilen von Fahrzeugen, insbesondere von Automobilen, oder dem des Verklebens von Konstruktionsteilen von Haushaltsgeräten, insbesondere von Waschmaschinen.

**13.** Verwendung einer Zusammensetzung nach einem der Ansprüche 1 bis 11 auf dem Gebiet der Anwendung des Verklebens von elektrischen/elektronischen Bauelementen, insbesondere in Haushaltsgeräten.

**14.** Verfahren zum Verkleben von mindestens zwei Substraten $S_1$ und $S_2$, **dadurch gekennzeichnet, dass** es darin besteht:

- eine Zusammensetzung nach irgendeinem der Ansprüche 1 bis 12 herzustellen,
- diese Zusammensetzung auf mindestens eine der zu verklebenden Oberflächen von $S_1$ und $S_2$ aufzutragen,
- die beschichteten Oberflächen miteinander zu verbinden,

- gegebenenfalls $S_1/S_2$ unter Druck zu setzen, und
- den Zusammenbau vorzugsweise zu erwärmen.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0681014 A
- EP 0326712 A
- EP 681014 A
- US 3220972 A
- US 3697473 A
- US 4340709 A
- US 3284406 A
- US 3434366 A
- US 3159601 A
- US 3159602 A
- EP 0057459 A
- EP 0188978 A
- EP 0190530 A
- US 3419593 A
- US 3715334 A
- US 3377432 A
- US 3814730 A
- FR 1528464 B
- FR 2372874 A